(19) Europäisches Patentamt
European Patent Office
Office européen des brevets

(11) **EP 2 267 682 B1**

(12) **FASCICULE DE BREVET EUROPEEN**

(45) Date de publication et mention
de la délivrance du brevet:
**05.08.2015 Bulletin 2015/32**

(51) Int Cl.:
*G05D 1/06* *(2006.01)*　　　*G08G 5/00* *(2006.01)*
*G01C 23/00* *(2006.01)*

(21) Numéro de dépôt: **10005925.2**

(22) Date de dépôt: **09.06.2010**

(54) **Procédé d'aide au pilotage à basse altitude**

Verfahren zur Hilfe bei der Flugkontrolle im Tiefflug

Method for assisting flight control of low-altittude flight

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **26.06.2009 FR 0903119**

(43) Date de publication de la demande:
**29.12.2010 Bulletin 2010/52**

(73) Titulaire: **Airbus Helicopters**
**13725 Marignane Cedex (FR)**

(72) Inventeurs:
• **Filias, François-Xavier**
**13330 Pelissanne (FR)**

• **Gillet, Marianne**
**13127 Vitrolles (FR)**

(74) Mandataire: **Pouillot, Laurent Pierre Paul**
**GPI & Associés**
**1330, rue Guillibert de la Lauzière**
**EuroParc de Pichauny, Bât B2**
**13856 Aix-en-Provence Cedex 3 (FR)**

(56) Documents cités:
| | |
|---|---|
| **EP-A1- 0 597 760** | **EP-A1- 1 598 718** |
| **EP-B1- 0 707 194** | **WO-A1-95/19609** |
| **WO-A1-2006/079718** | **WO-A2-2004/095394** |
| **FR-A1- 2 888 955** | **FR-A1- 2 898 972** |
| **FR-A1- 2 916 053** | |

## Description

La présente invention concerne un procédé d'aide au pilotage à basse altitude permettant à l'équipage d'un aéronef de préparer et de suivre un plan de vol sécurisé, hors infrastructures de vol aux instruments.

L'invention se trouve dès lors dans le domaine des systèmes de navigation et de gestion du vol d'un aéronef, et plus particulièrement d'un hélicoptère, qui recouvre usuellement les fonctions de positionnement, de préparation d'un plan de vol, et d'élaboration d'une trajectoire.

Il est à noter que l'on entend par « plan de vol » une route théorique que doit suivre un aéronef pour aller d'un premier à un deuxième points de passage, puis éventuellement du deuxième point de passage à un troisième point de passage, et ainsi de suite.

En outre, on entend par « trajectoire » le chemin que doit parcourir l'aéronef, ce chemin étant aussi proche que possible de la route théorique et tenant avantageusement compte des capacités de l'aéronef.

Voler à basse altitude au plus près des obstacles est extrêmement difficile et dangereux, sans un dispositif d'aide dédié apte à éviter toute collision de l'aéronef avec un obstacle. Un tel vol à basse altitude est d'autant plus difficile lorsque la visibilité est réduite, voire nulle, dans la mesure où le pilote ne peut plus se servir d'indications visuelles extérieures.

Or, il est parfois vital de voler à basse altitude lors de missions de sauvetage, effectuées par un hélicoptère par exemple. En effet, l'altitude ayant un impact néfaste sur une hémorragie par exemple, il convient de voler aussi près que possible du sol pour ne pas dégrader l'intégrité physique d'un individu accidenté.

Le document US 6317690 décrit un procédé d'élaboration d'un plan de vol utilisant un modèle numérique en élévation du terrain survolé, dénommé DTED® (Digital Terrain Elevation Data en langue anglaise) par l'homme du métier.

Ces modèles numériques sont "fermés", le pilote ne pouvant pas en modifier le contenu.

On trouve différents types de modèles numériques en fonction de leurs précisions. Ainsi, un modèle DTED® level 1 (Digital Terrain Elevation Data Level 1 en langue anglaise) met en oeuvre un maillage d'une précision de trois secondes d'arc soit environ 100 mètres, alors qu'un modèle DTED® level 2 (Digital Terrain Elévation Data Level 2 en langue anglaise) a une précision d'une seconde d'arc soit environ 30 mètres.

Néanmoins, ce document US 6317690 ne présente pas d'élaborations détaillées d'une trajectoire de vol.

Le document FR 2712251 prévoit de calculer une courbe fictive associée à une trajectoire théorique optimale de franchissement d'un obstacle et, dans le champ avant de l'aéronef prévoit de :

- déterminer tous les obstacles situés dans une zone de recherche,

- comparer les sommets desdits obstacles à la courbe fictive,

- définir comme dangereux les obstacles dont le sommet est supérieur à ladite courbe fictive,

- communiquer les sommets desdits obstacles dangereux.

Selon ce document, la courbe fictive suit donc le terrain avec un vecteur dynamique adapté à l'aéronef.

Toutefois, ce procédé implique l'utilisation de senseurs télémétriques pour déterminer les obstacles et leurs sommets. Il en résulte une efficacité fluctuante en fonction des senseurs utilisés.

Il en va de même pour le dispositif prévu par le document FR 1374954.

Selon le document WO2004/095394, un pilote définit une pluralité de points de passage, « way point » en langue anglaise, afin de générer des segments principaux horizontaux.

Chaque segment principal est alors positionné verticalement à une hauteur donnée du terrain, obtenu à l'aide d'un modèle numérique en élévation DTED®.

Cette première phase permet d'obtenir une ossature fictive pourvue d'une pluralité de paliers.

Ainsi, dans une projection horizontale sur le sol, la route théorique à suivre est une ligne brisée. De plus, dans une coupe verticale, la route théorique comporte des segments horizontaux parallèles les uns par rapport aux autres, chaque segment horizontal représentant un palier d'un profil en « marches d'escalier ».

Conformément à une seconde phase, un moyen de calcul détermine alors une trajectoire compatible avec les capacités de l'aéronef tendant à suivre le plus possible ladite ossature.

Ce procédé convient parfaitement au vol classique mais ne permet pas de faire un suivi de terrain à basse altitude. En effet, pour parvenir à un résultat satisfaisant, il conviendrait que le pilote détermine un très grand nombre de points de passage ce qui parait incompatible avec une mission de sauvetage réalisée de fait dans l'urgence.

Le document FR 2658636 suggère de déterminer une trajectoire d'évitement en minimisant un indice de performance fonction de l'altitude de l'aéronef, d'un écart latéral entre la position de l'aéronef et un itinéraire de référence, et un coefficient de pondération.

Le document US 2006/0031004 prévoit d'établir une trajectoire pour minimiser l'exposition d'un aéronef à une menace. Ainsi, une trajectoire est élaborée à partir d'un modèle numérique en élévation, puis on détermine un taux de survie basé sur l'exposition à une menace le long de cette trajectoire.

Par suite, une trajectoire optimisée est élaborée à partir de la trajectoire générant le meilleur taux de survie.

Le document US 2006/0031004 a donc pour objet des vols tactiques, et non pas des missions de sauvetage. Les trajectoires élaborées ne paraissent pas optimisées pour de telles missions de sauvetage, les passagers secourus ne devant pas subir trop de mouvements variés et brusques.

Il en va de même pour le document US 5706011.

Le document EP 0775953 divulgue un procédé au cours duquel un pilote détermine des points de passage, un moyen de calcul générant une trajectoire à pentes variables. Une telle trajectoire est efficace pour un vol à vue mais ne paraît pas convenir pour un vol aux instruments.

Le document US7321812 présente un procédé transformant un profil de terrain en un profil de suivi de terrain en vol en fonction de paramètres de performances d'un véhicule.

Enfin, le document FR 2 888 955 présente un autre procédé d'aide au pilotage à basse altitude.

La présente invention a alors pour objet de proposer un procédé d'aide au pilotage à basse altitude permettant de générer une trajectoire apte à être supportée notamment par des individus physiquement affaiblis.

On note que le document EP1598718 présente un procédé pour afficher une altitude de sécurité que peut suivre un aéronef en cas d'urgence. Bien que très intéressant et efficace, ce procédé ne vise pas à établir une trajectoire que doit suivre un aéronef pour répondre à des contraintes précises.

Selon l'invention telle que définie par la revendication 1, au cours d'un procédé d'aide au pilotage d'un aéronef à basse altitude au dessus d'un terrain, durant une première phase on construit une ossature à partir d'au moins un segment principal d'une largeur de couloir donnée s'étendant dans une projection horizontale d'une modélisation dudit terrain d'un premier point de passage jusqu'à un deuxième point de passage successifs déterminés par un opérateur, puis durant une deuxième phase on construit une trajectoire de consigne à l'aide de l'ossature. En effet, la trajectoire de consigne est élaborée pour reposer sur l'ossature afin de permettre notamment un vol par palier optimisé.

Ce procédé est notamment remarquable en ce que durant la première phase on découpe automatiquement le segment principal en une pluralité de segments secondaires d'une largeur de couloir donnée afin que l'ossature suive au plus près le terrain, les segments secondaires allant d'un premier segment secondaire partant du premier point de passage vers un dernier segment secondaire arrivant sur le deuxième point de passage, chaque segment secondaire étant agencé à une hauteur de consigne du plus haut point du terrain qu'il surplombe, ladite hauteur de consigne étant identique pour l'ensemble des segments secondaires d'un segment principal, deux segments secondaires adjacents étant alignés ou reliés par une barre verticale dans une coupe verticale dudit terrain passant par ledit segment principal.

On comprend que l'expression « segment secondaire » est utilisée par commodité, et représente la trace d'une surface secondaire dans un plan vertical, cette surface secondaire étant définie par la longueur du segment secondaire et la largeur de couloir. Le point haut du terrain situé sous chaque segment secondaire, ou de fait sous chaque surface secondaire, est éventuellement obtenu à l'aide d'un modèle numérique du terrain.

De plus, la largeur de couloir des segments secondaires est par exemple une donnée fournie par un opérateur en fonction d'exigences de sécurité. On comprend que la surface définie par un segment secondaire et une largeur de couloir est centrée sur ledit segment secondaire.

Il est à noter que dans l'ensemble de la description, on entend par « altitude d'un élément » la distance verticale séparant cet élément d'un niveau de référence donné qui est éventuellement paramétré par un opérateur, avantageusement le niveau de la mer dans un référentiel donné.

A l'inverse, on entend par « hauteur d'un élément » la distance verticale séparant cet élément du sol, une montagne par exemple.

Enfin, le plus haut point d'un terrain correspond au point du terrain ayant l'altitude la plus élevée. Ainsi, l'expression « plus haut point du terrain qu'il surplombe » est relative au point du terrain surplombé ayant l'altitude la plus élevée.

Ainsi, l'état de la technique, et plus particulièrement le document WO2004/095394 prévoit de relier deux points de passage par un unique segment principal se trouvant à une hauteur élevée du terrain garantissant que l'aéronef n'entrera pas en contact avec un obstacle.

Au contraire, l'invention prévoit de réaliser une ossature en partitionnant automatiquement chaque segment principal en une multitude de segments secondaires. Tous les segments secondaires se trouvent donc à une même hauteur de consigne d'au moins un point du terrain situé en dessous, mais de fait pas nécessairement à une même altitude.

Durant une deuxième phase, on détermine une trajectoire de consigne par la méthode dite du « jeter de drap » par exemple ou en s'appuyant sur des algorithmes existants de guidage 3D tels qu'ils sont implémentés dans les systèmes de gestion du vol ou FMS (Flight Management System en langue anglaise) en opération.

Le pilote ou un système de pilotage automatique contrôle alors l'aéronef pour suivre la trajectoire de consigne établie et définie dans un espace tridimensionnel. Dès lors, l'aéronef ne vole pas à une hauteur égale à la somme de l'altitude du plus haut point du terrain et d'une hauteur de sécurité, mais suit le terrain par paliers successifs.

Le procédé selon l'invention permet donc de réduire l'altitude de vol du giravion tout en volant par paliers de manière à préserver un individu accidenté.

Un tel vol par paliers successifs à une hauteur de consigne du sol permet en outre au pilote de retrouver des références physiologiques. Le pilote peut ainsi suivre une trajectoire lui octroyant des phases de vol en palier durant lesquelles sa charge de travail est amoindrie.

Ce procédé comporte les caractéristiques suivantes :

Une longueur secondaire de consigne à atteindre pour les segments secondaires étant déterminée, par exemple par un opérateur et de manière arbitraire, la division euclidienne d'une longueur principale du segment principal par la longueur secondaire de consigne donnant un quotient et un reste :

- si le reste est nul, durant la première phase, on découpe le segment principal à l'aide d'un nombre de segment secondaire égal au quotient, les segments secondaires ayant tous une longueur secondaire réelle égale à la longueur secondaire de consigne,

- si le reste est différent de zéro, durant la première phase on découpe le segment principal à l'aide d'une part d'un nombre de segments secondaires ayant la longueur secondaire de consigne égal au quotient moins une unité et d'autre part, un segment secondaire rallongé ayant une longueur secondaire rallongée égale à la somme de la longueur secondaire de consigne et du reste, le segment secondaire rallongé étant le premier segment secondaire du segment principal.

Ainsi, on obtient une ossature en forme de marches d'escalier comportant une succession de paliers, chaque palier étant matérialisé par un segment secondaire déterminé avantageusement automatiquement par un moyen de calcul.

Selon un premier mode de réalisation, la longueur secondaire de consigne est déterminée par un opérateur.

Selon un deuxième mode de réalisation, l'opérateur définit une durée de consigne pour traverser un segment secondaire et une vitesse air indiquée de consigne. Par suite, on détermine la longueur secondaire de consigne en multipliant la durée de consigne par une vitesse sol de consigne calculée à partir de la vitesse air indiquée de consigne et du vent régnant.

On rappelle de plus que la vitesse air indiquée est la vitesse air indiquée présentée à l'équipage.

De plus, la vitesse sol se déduit de la vitesse air indiquée et du vent régnant, par des méthodes usuelles décrites dans la littérature. Pour déterminer la vitesse sol de consigne, il convient d'utiliser lesdites méthodes en remplaçant la vitesse air indiquée par la vitesse air indiquée de consigne.

Favorablement, durant la première phase, un opérateur indiquant un nombre donné de segments secondaires dont la longueur secondaire doit être minimisée, on détermine l'altitude par rapport au niveau de référence donné, tel que le niveau de la mer dans un référentiel donné, de chaque segment secondaire et :

- on minimise à une longueur minimisée donnée la longueur secondaire du nombre donné de segments secondaires en partant du segment secondaire ayant l'altitude la plus élevée et en poursuivant par ordre décroissant d'altitude afin d'obtenir le nombre donné de segments secondaires minimisés,

- on centre chaque segment secondaire minimisé ayant une altitude supérieure aux segments secondaires adjacents pour obtenir un segment secondaire minimisé centré autour du plus haut point du terrain surplombé par ledit segment secondaire minimisé centré,

- le segment principal comportant une première portion allant du premier segment secondaire à un segment secondaire minimisé centré, une deuxième portion allant d'un segment secondaire minimisé centré vers le dernier segment secondaire, et éventuellement au moins une portion intermédiaire entre deux segments secondaires minimisés centrés, dans chacune desdites portions :

  o en partant de chaque segment secondaire minimisé centré, on déplace longitudinalement les segments secondaires adjacents pour reconstituer l'ossature, puis,

  o lorsque l'on atteint le segment secondaire ayant l'altitude la plus faible de ladite portion, on modifie ce segment secondaire ayant l'altitude la plus faible en augmentant ou en réduisant sa longueur secondaire afin d'obtenir un segment secondaire modifié apte à être relié à au moins un segment secondaire adjacent par une barre verticale.

En effet, un opérateur peut vouloir minimiser le temps de vol à une ou des altitudes élevées. Ainsi, l'invention offre la possibilité de réduire les segments secondaires passant par des points hauts.

Par suite, un opérateur donne un nombre donné de points hauts à minimiser en fonction du terrain, par exemple deux points hauts. On minimise ensuite les points hauts concernés, en l'occurrence les deux segments secondaires les plus hauts selon notre exemple, de manière à obtenir des segments secondaires minimisés dont la longueur secondaire est égale à une longueur minimisée.

Suivant le premier mode de réalisation, la longueur minimisée est directement donnée sous la forme d'une longueur par un opérateur. Au contraire, selon le deuxième mode de réalisation, l'opérateur donne une durée minimisée de vol, transformée automatiquement en longueur minimisée en étant multipliée par la vitesse sol calculée à partir de la vitesse air indiquée de consigne et du vent régnant.

Les segments secondaires adjacents aux segments minimisés centrés sont ensuite déplacés pour conserver la continuité de l'ossature, jusqu'à ce que l'on atteigne le segment secondaire positionné à l'altitude la plus basse, par rapport au niveau de référence donné, ce segment secondaire positionné à l'altitude la plus basse étant modifié.

Par ailleurs, pour ne pas impacter les zones de transition entre deux segments principaux, on ne minimise jamais la longueur secondaire des premier et dernier segments secondaires.

En outre, durant une phase intermédiaire séparant la première de la deuxième phase, on optimise favorablement l'ossature en minimisant la valeur de l'expression $\underline{E}$ suivante :

$$\underline{E} = \int_{ti}^{tf} tdcp(x)dx - \int_{ti}^{\tilde{tf}} Zt(x)dx$$

où x est l'abscisse curviligne de la trajectoire de consigne,

$tdcp(x)$ représente la fonction décrivant l'ossature déterminée durant la première phase,

$Zt(x)$ représente la hauteur du terrain survolé,

ti représente le début du premier segment secondaire du segment primaire concerné,

tf représente la fin du dernier segment secondaire du segment primaire concerné.

Concrètement, on minimise alors la surface séparant les segments secondaires du terrain survolé.

Par suite, l'ossature étant déplacée longitudinalement d'un pas donné de manière itérative sur une distance donnée, la valeur de ladite expression $\underline{E}$ étant recalculée à chaque pas, on minimise la valeur de l'expression $\underline{E}$ en utilisant lors de la deuxième phase l'ossature induisant une valeur minimale de ladite expression.

On déplace donc selon un premier sens l'ossature initiale d'un premier pas, égal au pas de discrétisation du modèle numérique du terrain utilisé de type DTED® level 2 par exemple, de manière à obtenir une ossature temporaire pour laquelle on recalcule l'expression $\underline{E}$.

On procède de même itérativement jusqu'à atteindre un déplacement total égal à une distance donnée, égale à la moitié de longueur du segment secondaire le plus court par exemple.

De même, on déplace l'ossature initiale selon un deuxième sens opposé au premier sens d'un pas de discrétisation pour obtenir une ossature temporaire pour laquelle on recalcule l'expression $\underline{E}$. On procède de même itérativement jusqu'à atteindre un déplacement total égal à une distance donnée, égale à la moitié de la longueur du segment secondaire le plus court par exemple.

Durant la deuxième phase, on utilise alors l'ossature ayant donnée lieu à la valeur la plus faible de ladite expression $\underline{E}$.

On comprend que, durant la modification de l'ossature réalisée au cours de la première phase ou de la phase intermédiaire à savoir soit suite à la minimisation d'au moins un segment secondaire ou soit suite à l'optimisation de l'expression $\underline{E}$ précédente, si un déplacement, une réduction ou une augmentation d'un segment secondaire entraîne une réduction ou une augmentation de la hauteur séparant le segment secondaire du terrain, alors on déplace verticalement ce segment secondaire à ladite hauteur de consigne du point le plus haut du terrain qu'il surplombe.

Avantageusement, chaque segment secondaire devant avoir une longueur secondaire comprise entre une longueur secondaire minimale donnée et une longueur secondaire maximale donnée, alors durant la modification de l'ossature au cours de la première phase ou d'une phase intermédiaire à savoir soit suite à la minimisation d'au moins un segment secondaire ou soit suite à l'optimisation de l'expression $\underline{E}$ précédente :

- si la longueur secondaire d'un segment secondaire devient supérieure ou égale à la longueur secondaire maximale donnée alors on coupe le segment secondaire concerné en deux segments secondaires de taille identique, et

- si la longueur secondaire d'un segment secondaire devient inférieure ou égale à la longueur secondaire minimale, on supprime le segment secondaire concerné et on allonge le segment secondaire adjacent ayant l'altitude la plus faible pour compenser.

Par exemple, la longueur secondaire minimale donnée est paramétrable par un opérateur et la longueur secondaire maximale donnée est égale à la somme de la longueur de consigne et de la longueur secondaire minimale.

Il est à noter que si un déplacement, une réduction ou un allongement d'un segment secondaire entraîne une réduction ou une augmentation de la hauteur séparant le segment secondaire du terrain, alors on déplace verticalement ce segment secondaire à ladite hauteur de consigne du point le plus haut du terrain qu'il surplombe.

Par ailleurs, durant la deuxième phase, on met en oeuvre la méthode dite du « jeter de drap » évoquée précédemment. Ainsi, on définit avantageusement une vitesse de montée et une vitesse de descente puis on construit la trajectoire de consigne en partant de segments secondaires sommitaux et en descendant de proche en proche vers des segments secondaires de moindre altitude, la trajectoire de consigne étant plane le long des segments secondaires qu'elle rencontre et ayant des pentes induites par les vitesses de montée et de descente dans les autres zones.

On entend par segment secondaire sommital un segment secondaire ayant une altitude supérieure à l'altitude des deux segments secondaires auquel il est relié, les premier et dernier segments secondaires d'un segment principal étant des segments secondaires sommitaux si leur altitude est supérieure à l'altitude de l'unique segment secondaire dudit segment principal auquel ils sont reliés.

Dès lors, un segment secondaire de moindre altitude est un segment secondaire ayant une altitude inférieure à l'altitude d'au moins un segment secondaire adjacent du segment principal auquel il est relié.

De manière imagée, ce procédé revient à déposer un drap au dessus de l'ossature, ce drap devant suivre des pentes imposées par les vitesses de montée et de descente définies par un opérateur.

Eventuellement, si durant la deuxième phase la trajectoire de consigne construite ne permet pas de passer à plat sur au moins un segment secondaire en générant une courbe continument montante, alors on modifie l'ossature en fusionnant ledit au moins un segment secondaire avec le segment secondaire précédent ledit au moins un segment secondaire pour construire un segment secondaire fusionné auquel on attribue l'altitude dudit segment secondaire précédant.

La trajectoire ascendante est par conséquent lissée.

De même, si durant la deuxième phase la trajectoire de consigne construite ne permet pas de passer à plat sur au moins un segment secondaire en générant une courbe continument descendante, alors on modifie l'ossature en fusionnant ledit au moins un segment secondaire avec le segment secondaire suivant ledit au moins un segment secondaire pour construire un segment secondaire fusionné auquel on attribue l'altitude dudit segment secondaire suivant.

Avantageusement, on construit un segment secondaire fusionné si ledit au moins un segment secondaire générant une courbe continûment montante ne comprend pas le premier segment secondaire du segment principal concerné ou si ledit au moins un segment secondaire générant une courbe continûment descendante ne comprend pas le dernier segment secondaire du segment principal concerné.

Eventuellement, la transformation de l'ossature réalisée durant la deuxième phase est utilisée de manière discrète uniquement pour la construction de la trajectoire de consigne. Plus précisément, on utilise deux ossatures distinctes, à savoir une ossature transformée durant la deuxième phase pour l'établissement de la trajectoire de consigne et une ossature ne prenant pas en compte la transformation de la deuxième phase pour un affichage sur un écran.

Enfin, un moyen de visualisation présentant le segment principal et l'aéronef prolongé par un segment rectiligne, si l'aéronef ne suit plus un segment principal, lorsque le segment rectiligne croise de nouveau un segment principal et sur ordre d'un opérateur, on crée un segment principal de retour que l'on découpe automatiquement en une pluralité de segments secondaires de retour afin qu'une ossature de retour suive au plus près le terrain et donne naissance à une trajectoire de retour.

En outre, une longueur secondaire de consigne à atteindre pour les segments secondaires étant déterminée, on découpe automatiquement ledit segment principal en une pluralité de segments secondaires si la longueur dudit segment principal est supérieure à deux fois ladite longueur secondaire de consigne.

L'invention et ses avantages apparaîtront avec plus de détails dans le cadre de la description qui suit avec des exemples de réalisation donnés à titre illustratif en référence aux figures annexées qui représentent :

- la figure 1, un schéma d'un dispositif apte à mettre en oeuvre l'invention,

- la figure 2, un schéma explicitant la notion de largeur de couloir d'un segment,

- les figures 3 et 4, des schémas explicitant la minimisation de segments secondaires,

- les figures 5, 6 et 7, des schémas explicitant l'optimisation d'une ossature,

- les figures 8 et 9, des schémas explicitant le lissage d'une trajectoire ascendante,

- les figures 10 et 11, des schémas le lissage d'une trajectoire descendante, et

- les figures 12 et 13, des schémas explicitant la création d'une ossature de retour.

Les éléments présents dans plusieurs figures distinctes sont affectés d'une seule et même référence.

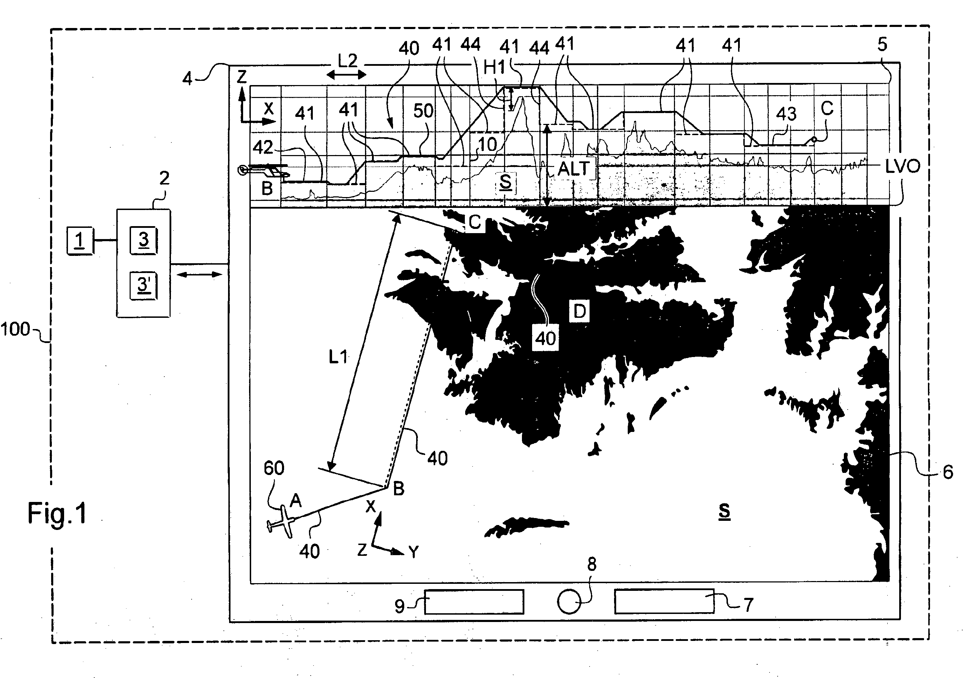

On note que trois directions X, Y et Z orthogonales les unes par rapport aux autres sont représentées sur la figure 1.

La première direction X est dite longitudinale alors que la deuxième direction Y est dite transversale. Enfin, une troisième direction Z est dite d'élévation.

La figure 1 présente un dispositif apte à mettre en oeuvre le procédé selon l'invention.

Ce dispositif comporte un moyen de calcul 2 muni d'un calculateur 3, un microprocesseur par exemple, et d'une mémoire 3'.

Ce moyen de calcul 2 communique avec une base de données 1 contenant un modèle numérique de terrain, tel qu'un modèle DTED® level 2, afin d'afficher sur un moyen de visualisation 4 une projection horizontale 6 dudit terrain S dans un plan (X, Y) représentant une vue de dessus du terrain et une coupe verticale 5 de ce terrain S le long de la route à suivre dans un plan (X, Z).

La base de données 1, le moyen de calcul 2 et le moyen de visualisation 4 peuvent faire partie d'une même unité 100 agencé dans le poste de pilotage d'un aéronef.

On note que le moyen de visualisation 4 comporte de plus un écran de dialogue 7, un moyen de saisie 9 et un moyen de sélection 8.

A l'aide du moyen de saisie 9, tel qu'un clavier, une souris dirigeant un pointeur ou tout autre moyen équivalent, durant une première phase, un opérateur saisit en vol ou au sol une pluralité de points de passage A, B, C, D par lesquels l'aéronef doit passer pour se rendre sur le lieu d'un accident par exemple.

En parallèle, le calculateur 3 du moyen de calcul 2, en liaison avec le moyen de visualisation 4, détermine des segments principaux 40 entre deux points de passage successifs. Ainsi, un premier, un deuxième et un troisième segments principaux 40 sont créés respectivement entre les points de passage A et B, les points de passage B et C puis les points de passage C et D.

De plus on attribue à chaque segment principal une même largeur de couloir, paramétrée préalablement et contenue dans la mémoire 3' du moyen de calcul 2. Cette largeur de couloir est paramétrée par l'opérateur ou par le fabricant pour prendre en compte l'incertitude des moyens de localisation de l'aéronef.

En reliant puis en découpant les segments principaux, on construit une ossature 10 d'une route qui permet, durant une deuxième phase de bâtir une trajectoire de consigne que le pilote doit suivre.

Pour réaliser un vol à basse altitude sur un segment principal, le calculateur 2 sélectionne ledit segment principal choisi. La sélection peut se faire à l'aide d'un pointeur déplacé par le moyen de sélection 8.

On note que le segment principal choisi sur lequel l'opérateur travaille, en l'occurrence le deuxième segment principal reliant les points de passage B et C dans notre exemple, apparaît sur la coupe verticale 5.

Dès lors, le calculateur 3 du moyen de calcul 2 coupe automatiquement le segment principal 40 sélectionné en une pluralité de segments secondaires 41 qui apparaissent sur le moyen de visualisation 4.

Ainsi, on peut projeter sur la projection horizontale 6 d'une part le segment principal 40 sous la forme d'un trait continu de couleur bleu par exemple et, d'autre part les segments secondaires 41 sous la forme de traits discontinus de couleur rouge par exemple. De plus, on fait apparaître les segments secondaires 41 sous la forme de traits horizontaux sur la coupe verticale 5 du terrain.

En outre, le calculateur 3 du moyen de calcul 2 positionne verticalement les segments secondaires pour éviter toute collision avec le terrain S.

Ainsi, un opérateur ayant préalablement paramétré une hauteur de consigne H1 mémorisée dans la mémoire 3', le calculateur 3 dispose chaque segment secondaire 41 à la hauteur de consigne H1 du point du terrain le plus haut qu'il surplombe, à savoir le point du terrain surplombé ayant l'altitude la plus haute. En fonction de la topologie du terrain, les segments secondaires 41 d'un même segment principal 40 sont disposés à des altitudes différentes les uns des autres.

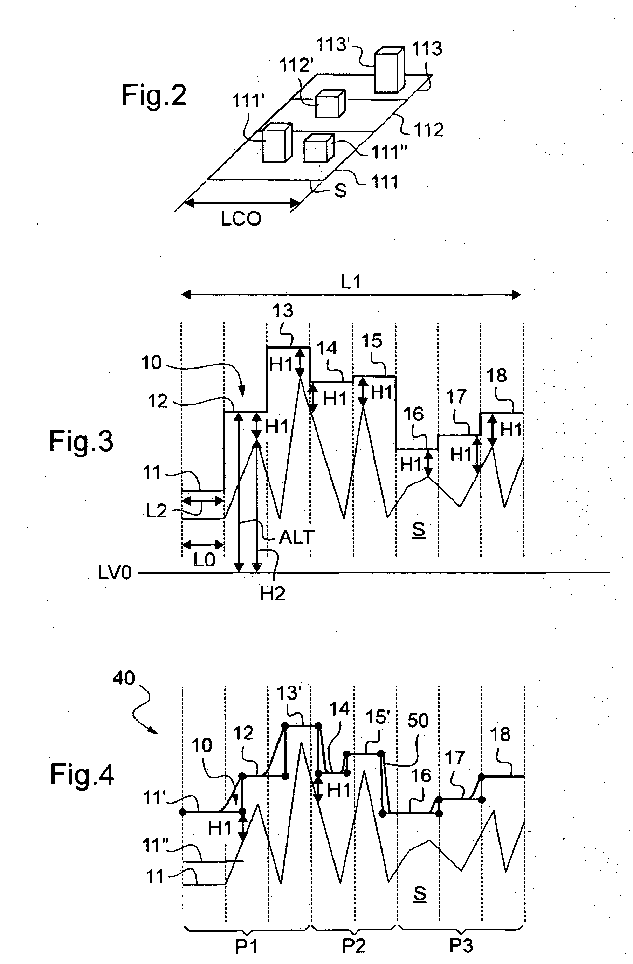

En référence à la figure 2, le calculateur 3 fait appel à la base de données 1 pour obtenir les informations relatives au terrain S, et prend en compte la largeur de couloir LC0 donnée.

A titre d'exemple, trois segments secondaires doivent être positionnés au dessus de trois parties distinctes 111, 112, 113 du terrain S. Ainsi :

- un premier segment secondaire est positionné à la hauteur de consigne H1 du point le plus haut 111' de la première partie 111, à savoir le point de la première partie 111 ayant la plus haute altitude,

- un deuxième segment secondaire est positionné à la hauteur de consigne H1 du point le plus haut 112' de la deuxième partie 112, à savoir le point de la deuxième partie 112 ayant la plus haute altitude,

- un troisième segment secondaire est positionné à la hauteur de consigne H1 du point le plus haut 113' de la troisième partie 113, à savoir le point de la troisième partie 113 ayant la plus haute altitude.

Le calculateur 3 prenant en compte la largeur de couloir LC0, on constate qu'il n'est pas obligatoire que les points les plus hauts du terrain utilisé soient alignés.

En référence à la figure 1, les segments secondaires 41 sont donc :

- répartis longitudinalement le long d'un segment principal 40 en allant d'un premier segment secondaire 42, partant du premier point de passage B par lequel l'aéronef doit passer, vers un dernier segment secondaire 43 rejoignant le deuxième point de passage C du segment principal associé,

- disposés verticalement à une hauteur de consigne H1 du terrain $\underline{S}$,

- horizontaux et parallèles au niveau de référence donné LV0, le niveau de la mer par exemple dans un référentiel donné en considérant que la mer est contenue dans un plan.

Afin de constituer l'ossature 10, le calculateur 3 du moyen de calcul 2 relie deux segments secondaires adjacents disposés à des altitudes distinctes par une barre verticale, alors que deux segments secondaires adjacents se trouvant à une même altitude sont alignés.

Ainsi, durant une première phase le moyen de calcul 2 a construit automatiquement une ossature 10 munie d'une succession de paliers épousant au mieux la forme du terrain $\underline{S}$, à une hauteur de consigne H1 réduite de ce terrain.

Il est à noter que la première phase décrite peut évidemment être réalisée sur chaque segment principal. De plus, il est concevable d'utiliser des paramètres différents d'un segment principal à l'autre, à savoir une hauteur de consigne, une largeur de couloir, une longueur de consigne, une durée de consigne ou encore une vitesse air indiquée de consigne différentes.

Afin de sectionner le segment principal en une pluralité de segments secondaires, on définit une longueur secondaire de consigne L0 que doit atteindre la longueur secondaire L1 de chaque segment secondaire.

Selon un premier mode de réalisation, un opérateur utilise le moyen de saisie 9 pour déterminer une longueur secondaire de consigne L0, en mètres par exemple, de segments secondaires 41.

Selon un deuxième mode de réalisation l'opérateur utilise le moyen de saisie 9 pour déterminer une durée de consigne D0 et une vitesse air indiquée de consigne IAS0. Le moyen de calcul 2 en déduit une longueur de consigne L0 de segments secondaire égale au produit de la durée de consigne D0 et d'une vitesse sol de consigne Vs calculée à partir de la vitesse air indiquée de consigne IAS0 et du vent régnant à l'extérieur de l'aéronef soit :

$$L0 = D0*(Vs)$$

où « * » représente le signe de la multiplication.

Indépendamment du mode de réalisation, cette longueur de consigne L0 est mémorisée dans la mémoire 3' du moyen de calcul 2.

Le moyen de calcul 2 peut dès lors effectuer la partition du segment principal concerné.

En outre, une longueur secondaire de consigne L0 à atteindre pour les segments secondaires 41 étant désormais déterminée, le calculateur 3 du moyen de calcul 2 détermine la longueur principale L1 du segment principal puis effectue la division euclidienne de cette longueur principale L1 du segment principal par la longueur secondaire de consigne L0 déterminée, cette division euclidienne donnant de fait un quotient $\underline{Q}$ et un reste $\underline{R}$.

Si ce reste est nul, durant la première phase le moyen de calcul 2 découpe le segment principal à l'aide d'un nombre de segments secondaires égal au quotient, les segments secondaires ayant donc tous une longueur secondaire L2 égale à la longueur secondaire de consigne L0.

Par contre, si le reste est différent de zéro, un tel découpage devient impossible. Le moyen de calcul 2 découpe alors le segment principal à l'aide d'une part d'un nombre de segments secondaires ayant la longueur secondaire de consigne L0 égal au quotient de la division euclidienne réalisée moins une unité et d'autre part, un segment secondaire rallongé ayant une longueur secondaire rallongée L3 égale à la somme de la longueur secondaire de consigne L0 et du reste $\underline{R}$ soit :

$$L3 = L0 + R$$

où Q représente le quotient de la division euclidienne,
« + » représente le signe de l'addition,
R représente le reste de la division euclidienne.

Le moyen de calcul 2 choisit alors de rallonger le premier segment secondaire du segment principal concerné.

De plus, le moyen de calcul 2 détermine l'altitude de chaque segment secondaire par rapport au niveau de référence donné LV0, et stocke cette altitude dans sa mémoire 3'.

Par conséquent, le moyen de calcul 2 construit l'ossature 10 à l'aide d'un segment secondaire rallongé et d'un nombre Q moins une unité de segments secondaires ayant une longueur secondaire L2 égale à la longueur secondaire de consigne L0, deux segments secondaires adjacents étant soit alignés s'ils se trouvent à la même altitude soit reliés par une barre verticale.

En référence aux figures 3 et 4 qui représentent une ossature distincte de l'ossature montrée sur la figure 1, durant la première phase, un opérateur peut choisir d'optimiser l'ossature 10 en limitant la longueur secondaire des segments secondaires situés aux plus hautes altitudes ALT par rapport au niveau de référence donné choisi par l'opérateur.

Ainsi, un opérateur utilise le moyen de saisie 9 pour indiquer un nombre donné N de segments secondaires à minimiser, à titre d'exemple un nombre donné N égal à 2.

Le calculateur 3 du moyen de calcul minimise alors la longueur secondaire d'un nombre donné N de segments secondaires, en partant du segment secondaire ayant l'altitude ALT la plus élevée et en poursuivant par ordre décroissant.

Dès lors, l'altitude de chaque segment secondaire 11 à 18 étant préalablement déterminée et mémorisée, le calculateur 3 minimise la longueur secondaire du troisième segment secondaire 13 pour obtenir un troisième segment secondaire minimisé 13' d'une longueur minimisée, puis la longueur secondaire du cinquième segment secondaire 15 pour obtenir un cinquième segment secondaire minimisé 15' ayant ladite longueur minimisée en prenant soin de centrer les segments secondaires minimisées 13', 15' ayant une altitude supérieure à leurs deux segments adjacents autour du point le plus haut qu'ils surplombent afin d'obtenir des segments secondaires minimisés centrés.

Le troisième segment secondaire minimisé 13' ayant une altitude supérieure à ses deux segments secondaires adjacents, les deuxième et quatrième segments secondaires, on centre ce troisième segment secondaire minimisé 13' autour du plus haut point du terrain qu'il surplombe afin d'obtenir un troisième segment secondaire minimisé centré 13'.

De même, on centre le cinquième segment secondaire minimisé 15' pour obtenir un cinquième segment secondaire minimisé centré 15'.

Au contraire, on comprend que l'on ne centre pas un segment secondaire minimisé s'il n'a pas une altitude supérieure à ces segments secondaires directement adjacents à savoir le segment secondaire qui le précède et le segment secondaire qui lui fait suite le cas échéant. Une telle situation, non représentée sur les figures, peut se produire si des segments secondaires minimisés sont consécutifs.

Suivant le premier mode de réalisation, la longueur minimisée est directement donnée sous la forme d'une longueur par un opérateur. Au contraire, selon le deuxième mode de réalisation, l'opérateur donne une durée minimisée de vol, transformée automatiquement en longueur minimisée en étant multipliée par la vitesse sol de consigne calculée à partir de la vitesse air indiquée de consigne IAS0 et du vent régnant.

Dès lors, il devient impossible de relier les segments secondaires minimisés à leurs segments adjacents par une barre verticale.

Par suite, le calculateur 3 modifie et/ou déplace certains segments secondaires pour obtenir une ossature 10 continue.

Le segment principal 40 concerné comportant une première portion P1 allant du premier segment secondaire 11 au troisième segment secondaire minimisé centré 13', une deuxième portion P3 allant du cinquième segment secondaire minimisé centré 15' vers le dernier segment secondaire 18, et dans le cas présent une portion intermédiaire P2 entre les troisième et cinquième segments secondaires minimisés centrés 13', 15', dans chacune des portions P1, P2, P3 :

  o en partant du ou des segments secondaires minimisés centrés, on déplace longitudinalement de proche en proche les segments secondaires adjacents, minimisés ou non minimisés, pour reconstituer l'ossature 10, puis,

  o lorsque l'on atteint le segment secondaire ayant l'altitude la plus faible de ladite portion, on modifie ce segment secondaire ayant l'altitude la plus faible en augmentant ou en réduisant sa longueur secondaire L2 afin d'obtenir un segment secondaire modifié apte à être relié à au moins un segment secondaire adjacent par une barre verticale.

De plus, si un déplacement, une réduction ou un allongement d'un segment secondaire entraine une réduction ou une augmentation de la hauteur séparant ce segment secondaire du terrain S, alors on déplace verticalement ce segment secondaire à ladite hauteur de consigne H1 du point le plus haut du terrain qu'il surplombe.

Conformément à l'exemple représenté, dans la première portion P1, les segments secondaires qui sont adjacents au troisième segment secondaire minimisé centré 13' sont déplacés. On arrête de déplacer lesdits segments secondaires lorsque l'on doit traiter le segment secondaire de la première portion ayant l'altitude la plus faible.

Ainsi, le calculateur 3 s'occupe en premier lieu du deuxième segment secondaire 12 adjacent au premier segment secondaire minimisé centré. Le calculateur 3 déplace donc longitudinalement le deuxième segment secondaire 12 pour le relier au troisième segment secondaire minimisé centré 13' par une barre verticale.

Le calculateur 3 étudie ensuite le premier segment secondaire 11. Ce premier segment secondaire 11 représentant le segment secondaire ayant l'altitude la plus faible de la première portion P1 par rapport au niveau de référence donné, le calculateur 3 le modifie en le rallongeant pour pouvoir le relier au deuxième segment secondaire 12.

Cependant, un tel premier segment secondaire allongé 11" conduit à une interférence avec le terrain S. Par suite, le calculateur 3 déplace verticalement le nouveau premier segment secondaire pour le disposer à la hauteur de consigne H1 par rapport au terrain S.

Il est à noter que l'on peut avantageusement utiliser des segments secondaires ayant une longueur secondaire L2 comprise entre une longueur secondaire minimale LMIN donnée et une longueur secondaire maximale LMAX donnée, la longueur secondaire minimale LMIN étant par exemple paramétrée par un opérateur alors que la longueur secondaire maximale est éventuellement égale à la longueur de consigne L0 à laquelle on ajoute ladite longueur secondaire minimale LMIN soit :

$$LMAX = LMIN + LO$$

Bien évidemment, il est possible de laisser à un opérateur le soin de paramétrer la longueur secondaire maximale.

Par conséquent, si la longueur secondaire d'un segment secondaire devient supérieure ou égale à la longueur secondaire maximale donnée alors le moyen de calcul 2 coupe le segment secondaire concerné en deux segments secondaires de taille identique. A l'inverse, si la longueur secondaire du segment secondaire devient inférieure ou égale à la longueur secondaire minimale, on supprime ledit segment secondaire concerné et on allonge le segment secondaire adjacent ayant l'altitude la plus faible pour compenser.

Ainsi, si la longueur secondaire du premier segment secondaire modifié est supérieure ou égale à la longueur secondaire maximale, alors le calculateur 3 du moyen de calcul 2 scindera ce premier segment secondaire.

Dans la deuxième portion P2, le calculateur 3 du moyen de calcul analyse le quatrième segment secondaire 14. Ce quatrième segment secondaire 14 étant le segment secondaire de la deuxième portion P2 ayant l'altitude la plus basse, le calculateur réduit sa longueur secondaire afin de le relier par des barres verticales aux troisième et cinquième segments minimisés centrés.

De plus, le calculateur déplace verticalement le quatrième segment vers le bas pour le disposer à la hauteur de consigne H1 par rapport au terrain S.

On note que, si la longueur secondaire du quatrième segment secondaire 14 modifié était devenue inférieure ou égale à la longueur secondaire minimale, alors le calculateur 3 du moyen de calcul 2 aurait fusionné le quatrième segment secondaire 14 avec le segment secondaire adjacent ayant l'altitude la plus faible, à savoir le cinquième segment secondaire minimisé centré.

Enfin, dans la troisième portion P3, la minimisation et le centrage du cinquième segment secondaire 15 entraine un allongement du sixième segment secondaire 16.

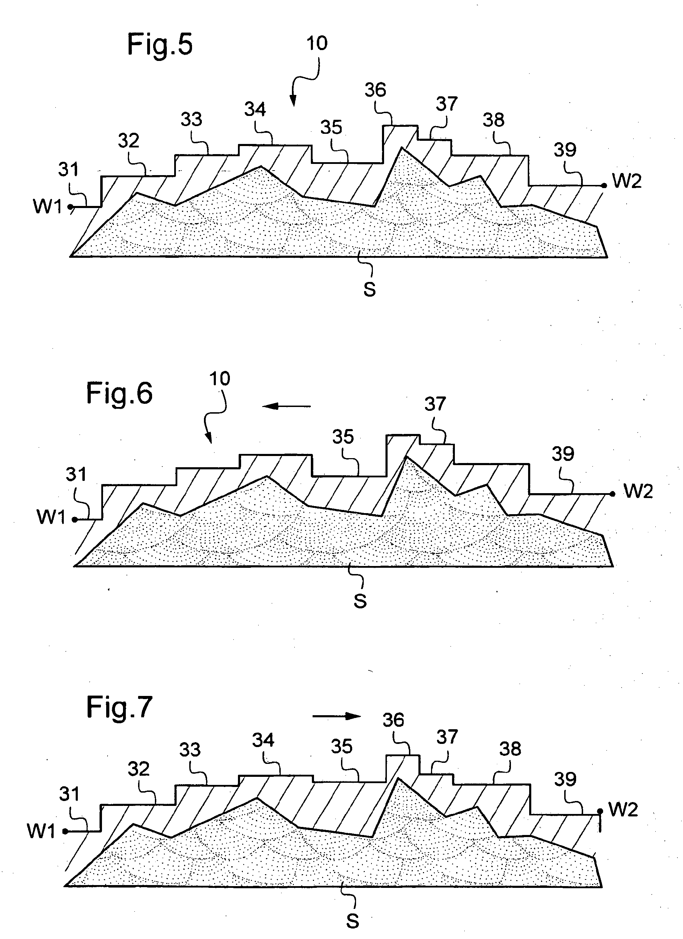

En référence aux figures 5 à 7 qui représentent une ossature distincte de l'ossature montrée sur les figures 1, 3 et 4, à l'issue de la première phase et antérieurement à la deuxième phase du procédé, on optimise l'ossature 10 en minimisant la valeur de l'expression E suivante :

$$E = \int_{ti}^{tf} tdcp(x)dx - \int_{ti}^{tf} Zt(x)dx$$

où $x$ est l'abscisse curviligne de la trajectoire de consigne
$tdcp(x)$ représente la fonction décrivant l'ossature 10 déterminée durant la première phase,
$Zr(x)$ représente la hauteur (H2) du terrain S survolé,

ti le début du premier segment secondaire du segment principal concerné,

tf représente la fin du dernier segment secondaire du segment principal concerné.

L'expression $\underline{E}$ représente alors la surface des zones hachurées sur les figures 5 à 7.

Dans un premier temps, le calculateur 3 du moyen de calcul 2 détermine la valeur de l'expression $\underline{E}$ à l'aide de l'ossature obtenue lors de la première phase, puis stocke cette valeur dans la mémoire 3' du moyen de calcul 2.

Dans un deuxième temps, le calculateur 3 du moyen de calcul 2 déplace longitudinalement l'ossature originelle déterminée lors de la première phase d'un pas donné de manière itérative sur une distance donnée, et recalcule la valeur de l'expression E à chaque pas.

Plus précisément, en référence à la figure 6, le moyen de calcul déplace l'ossature vers la gauche d'un pas donné, égal optionnellement au pas de discrétisation du modèle numérique du terrain.

Le déplacement de l'ossature vers la gauche induit :

- un déplacement vertical vers le haut du septième segment secondaire 37 afin que ce septième segment secondaire 37 soit à la hauteur de consigne H1 par rapport au terrain $\underline{S}$, et

- un déplacement vertical vers le bas du cinquième segment secondaire 35 afin que ce cinquième segment secondaire 35 soit à la hauteur de consigne H1 par rapport au terrain $\underline{S}$,

- un allongement du neuvième segment secondaire 39 et un rétrécissement du premier segment secondaire 31.

Le moyen de calcul 2 détermine la valeur de l'expression E puis la stocke dans sa mémoire 3'.

Dès lors, le moyen de calcul 2 répète ces opérations jusqu'à ce que le déplacement total vers la gauche atteigne une distance donnée, égale à la moitié de la longueur secondaire du segment secondaire le plus court par exemple.

En référence à la figure 7, le moyen de calcul 2 effectue ces mêmes opérations en déplaçant l'ossature vers la droite.

Suite à la phase intermédiaire et durant la deuxième phase, le moyen de calcul 2 utilise l'ossature donnant lieu à la plus faible valeur de l'expression $\underline{E}$ pour élaborer la trajectoire à suivre.

Un opérateur utilise alors le moyen de saisie 9 pour paramétrer une vitesse de montée et une vitesse descente de consigne. Le moyen de calcul en déduit de fait les pentes de montée et descente de la trajectoire de consigne 50 à suivre par le pilote, ou suivie par un pilote automatique par exemple.

En référence à la figure 4, le moyen de calcul 2 génère la trajectoire de consigne 50 en partant des segments sommitaux 13', 15', 18, la trajectoire de consigne 50 étant plane le long des segments secondaires qu'elle rencontre et ayant des pentes induites par les vitesses de montée et descente dans les autres zones.

Entre une montée et un vol à plat ou une descente et un vol à plat, la trajectoire de consigne 50 élaborée tient compte des capacités de l'aéronef, sa masse et sa puissance notamment.

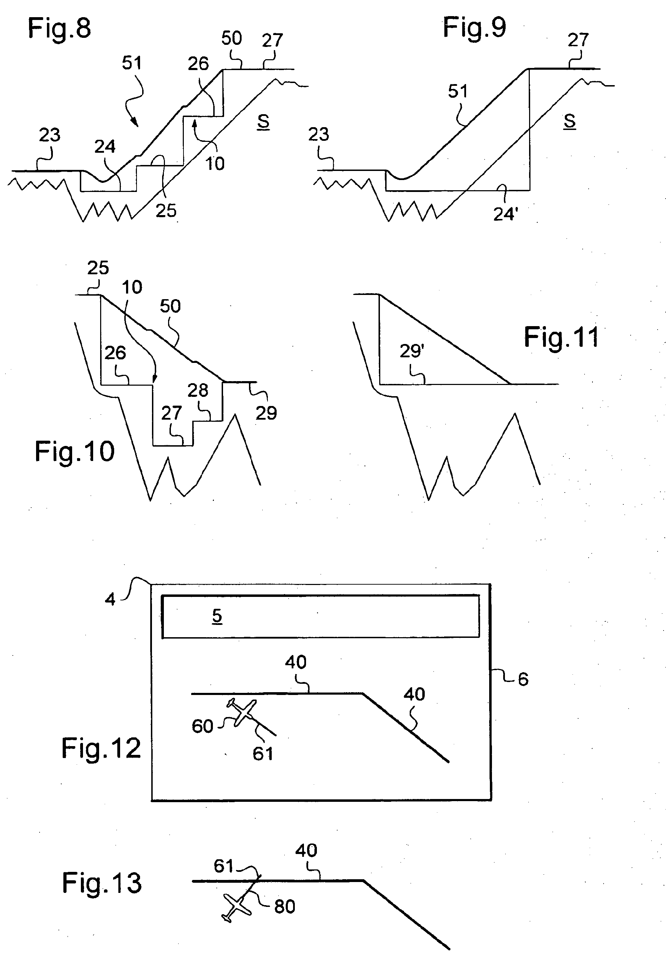

Conformément à l'exemple représenté sur la figure 8, la trajectoire de consigne 50 tend à être plane entre deux segments secondaires distincts.

Par suite, si durant la deuxième phase la trajectoire de consigne 50 construite ne permet pas de passer à plat sur un premier lot de segments secondaires consécutifs 25, 26 en générant une courbe continûment montante 51, alors la trajectoire tend à être saccadée, le premier lot ayant de fait au moins un segment secondaire.

Afin de lisser cette trajectoire de consigne, en référence à la figure 9, le moyen de calcul 2 modifie l'ossature 10 pour construire un unique segment secondaire fusionné en fusionnant ledit premier lot et le segment secondaire précédant ce premier lot, à savoir le segment secondaire parcouru par l'aéronef avant de parcourir le ou les segments secondaires du premier lot.

Ainsi, le moyen de calcul 2 modifie l'ossature 10 en fusionnant les deux segments secondaires 25, 26 consécutifs du premier lot avec le segment secondaire précédant 24 ce premier lot pour construire un segment secondaire fusionné 24' auquel on attribue l'altitude du segment secondaire précédant 24.

Pour ne pas perturber le pilote en affichant une ossature impactant le sol S, on affiche au pilote l'ossature déterminée préalablement au début de la deuxième phase et non pas l'ossature transformée durant la deuxième phase.

De même, en référence aux figures 10 et 11, si durant la deuxième phase la trajectoire de consigne 50 construite ne permet pas de passer à plat sur un deuxième lot de segments secondaires consécutifs 26, 27, 28 en générant une courbe continument descendante, alors la trajectoire tend à être saccadée, le deuxième lot ayant de fait au moins un segment secondaire.

Afin de lisser cette trajectoire de consigne 50, le moyen de calcul 2 modifie l'ossature 10 pour construire un unique segment secondaire fusionné en fusionnant ledit deuxième lot et le segment secondaire suivant ce deuxième lot, à savoir le segment secondaire parcouru par l'aéronef après le ou les segments secondaires du deuxième lot.

Ainsi, le moyen de calcul 2 modifie l'ossature 10 en fusionnant les trois segments secondaires 26, 27, 28 consécutifs du deuxième lot avec le segment secondaire suivant 29 le deuxième lot pour construire un segment secondaire fusionné 29' auquel on attribue l'altitude segment secondaire suivant 29.

On note que l'on construit un segment secondaire fusionné si ledit au moins un segment secondaire du premier lot générant une courbe continument montante ne comprend pas le premier segment secondaire du segment principal concerné ou si ledit au moins un segment secondaire du deuxième lot générant une courbe continument descendante ne comprend pas le dernier segment secondaire du segment principal concerné

Ainsi, au sol ou en vol, le procédé selon l'invention mis avantageusement en oeuvre par l'unité 100 permet d'établir automatiquement une trajectoire de consigne qui suit le terrain à basse altitude.

De plus, à partir du moment où les informations nécessaires à son fonctionnement sont stockées dans sa mémoire 3', le moyen de calcul peut recalculer automatiquement la trajectoire de consigne.

Par exemple, si le pilote déplace le point de passage C pour des raisons climatiques par exemple, le moyen de calcul 2 détermine automatiquement une ossature permettant de rejoindre le nouvel emplacement de ce point de passage C, et la trajectoire associée.

Par ailleurs, la figure 12 présente un moyen de visualisation présentant deux segments principaux 40 et un aéronef 60 sur une projection horizontale du terrain.

L'aéronef 60 est de plus prolongé par un segment rectiligne 61, appelé aussi « palpeur de retour » par commodité.

On constate que l'aéronef 60 ne suit plus un segment principal 40 et se trouve de fait dans un vol dit libre.

Par contre, en référence à la figure 13, lorsque le segment rectiligne 61 croise de nouveau un segment principal 40 et sur ordre d'un opérateur, le moyen de calcul 2 crée un segment principal de retour 80 qu'il découpe automatiquement en une pluralité de segments secondaires de retour afin qu'une ossature de retour suive au plus près le terrain $\underline{S}$ et donne naissance à une trajectoire de retour.

Naturellement, la présente invention dont l'objet est défini par les présentes revendications, peut être sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

**1.** Procédé d'aide au pilotage d'un aéronef (60) à basse altitude au dessus d'un terrain ($\underline{S}$) mis en oeuvre par un dispositif au cours duquel durant une première phase le procédé comprend une étape de construction d'une ossature (10) à partir d'au moins un segment principal (40) d'une largeur de couloir donnée s'étendant dans une projection horizontale (X, Y) d'une modélisation dudit terrain (S) d'un premier point de passage ($\underline{B}$) jusqu'à un deuxième point de passage ($\underline{C}$) successifs déterminés par un opérateur, puis durant une deuxième phase le procédé comprend une étape de construction d'une trajectoire de consigne (50) à l'aide de ladite ossature (10),

durant la première phase, le procédé comprend une étape visant à découper automatiquement ledit segment principal (40) en une pluralité de segments secondaires (41, 42, 43) d'une largeur de couloir donnée afin que l'ossature (10) suive au plus près ledit terrain ($\underline{S}$), lesdits segments secondaires (41) allant d'un premier segment secondaire (42) partant dudit premier point de passage ($\underline{B}$) vers un dernier segment secondaire (43) arrivant sur le deuxième point de passage ($\underline{C}$), chaque segment secondaire (41, 42, 43) étant agencé à une hauteur de consigne (H1) du plus haut point du terrain qu'il surplombe, ladite hauteur de consigne (H1) est identique pour l'ensemble des segments secondaires (41, 42, 43) d'un segment principal (40), deux segments secondaires adjacents (41) étant alignés ou reliés par une barre verticale (44) dans une coupe verticale (X, Z) dudit terrain passant par ledit segment principal (40), **caractérisé en ce que**, une longueur secondaire de consigne (L0) à atteindre pour les segments secondaires (41) étant déterminée, la division euclidienne d'une longueur principale (L1) du segment principal par la longueur secondaire de consigne (L0) donnant un quotient et un reste :

- si ledit reste est nul, durant la première phase le segment principal est découpé à l'aide d'un nombre de segments secondaires égal audit quotient, lesdits segments secondaires ayant tous une longueur secondaire réelle (L2) égale à ladite longueur secondaire de consigne (L0),
- si ledit reste est différent de zéro, durant la première phase le segment principal est découpé à l'aide d'une part d'un nombre de segments secondaires ayant la longueur secondaire de consigne (L0) égal audit quotient moins une unité et d'autre part, un segment secondaire rallongé ayant une longueur secondaire rallongée (L3) égale à la somme de la longueur secondaire de consigne (L0) et du reste, ledit segment secondaire rallongé étant le premier segment secondaire du segment principal.

**2.** Procédé selon la revendication 1,
**caractérisé en ce que** ladite longueur secondaire de consigne (L0) est déterminée par un opérateur.

**3.** Procédé selon la revendication 1,
**caractérisé en ce que**, un opérateur définissant une durée de consigne (D0) pour traverser un segment secondaire et une vitesse air indiquée de consigne (IAS), on détermine ladite longueur secondaire de consigne (L0) en multipliant ladite durée de consigne (D0) par une vitesse sol calculée à partir de ladite vitesse air indiquée de consigne (IAS0) et du vent régnant.

**4.** Procédé selon l'une quelconque des revendications précédentes,
**caractérisé en ce que**, durant la première phase, un opérateur indiquant un nombre donné ($\underline{N}$) de segments secondaires dont la longueur secondaire doit être minimisée, on détermine l'altitude (ALT) par rapport au niveau de référence donné (LV0) de chaque segment secondaire et :

- on minimise à une longueur minimisée donnée la longueur secondaire dudit nombre donné ($\underline{N}$) de segments secondaires en partant du segment secondaire ayant l'altitude (ALT) la plus élevée (13, 15) et en poursuivant par ordre décroissant d'altitude afin d'obtenir ledit nombre donné de segments secondaires minimisés (13', 15'),
- on centre chaque segment secondaire minimisé (13', 15') ayant une altitude supérieure aux segments secondaires adjacents pour obtenir un segment secondaire minimisé centré autour du plus haut point du terrain surplombé par ledit segment secondaire minimisé centré (13', 15'),
- ledit segment principal comportant une première portion (P1) allant du premier segment secondaire (11) à un segment secondaire minimisé centré (13'), une deuxième portion (P3) allant d'un segment secondaire minimisé centré (13', 15') vers le dernier segment secondaire (18), et éventuellement au moins une portion intermédiaire (P2) entre deux segments secondaires minimisés centrés (13', 15'), dans chacune desdites portions (P1, P2, P3) :

o en partant de chaque segment secondaire minimisé centré (13', 15'), on déplace longitudinalement les segments secondaires adjacents (12) pour reconstituer l'ossature (10), puis,
o lorsque l'on atteint le segment secondaire ayant l'altitude la plus faible (11, 14, 16) de ladite portion (P1, P2, P3), on modifie ce segment secondaire ayant l'altitude la plus faible (11, 14, 16) en augmentant ou en réduisant sa longueur secondaire (L2) afin d'obtenir un segment secondaire modifié (11', 14', 16') apte à être relié à au moins un segment secondaire adjacent par une barre verticale.

**5.** Procédé selon la revendication 4,
**caractérisé en ce que** l'on ne minimise jamais la longueur secondaire desdits premier et dernier segments secondaire

**6.** Procédé selon la revendication 5,
**caractérisé en ce que** durant une phase intermédiaire séparant la première de la deuxième phase, on optimise l'ossature (10) en minimisant la valeur de l'expression ($\underline{E}$) suivante :

$$\underline{E} = \int_{ti}^{tf} tdcp(x)dx - \int_{ti}^{tf} Zt(x)dx$$

où x est l'abscisse curviligne de la trajectoire de consigne
$tdcp(x)$ représente la fonction décrivant l'ossature (10) déterminée durant la première phase,
$Zr(x)$ représente la hauteur (H2) du terrain (S) survolé,
ti représente le début du premier segment secondaire,
tf représente la fin du dernier segment secondaire.

**7.** Procédé selon la revendication 6,
**caractérisé en ce que** ladite ossature (10) étant déplacée longitudinalement d'un pas donné de manière itérative sur une distance donnée, ladite valeur étant recalculée à chaque pas, on minimise la valeur de ladite expression ($\underline{E}$) en utilisant lors de la deuxième phase l'ossature induisant une valeur minimale de ladite expression ($\underline{E}$).

**8.** Procédé selon l'une quelconque des revendications 4 à 7,
**caractérisé en ce que**, si un déplacement, une réduction ou un allongement d'un segment secondaire entraine une réduction ou une augmentation de la hauteur séparant le segment secondaire du terrain (S), alors on déplace verticalement ce segment secondaire à ladite hauteur de consigne (H1) du point le plus haut du terrain qu'il surplombe.

9. Procédé selon l'une quelconque des revendications 4 à 8,
**caractérisé en ce que**, chaque segment secondaire devant avoir une longueur secondaire comprise entre une longueur secondaire minimale donnée et une longueur secondaire maximale donnée, alors :

- si la longueur secondaire d'un segment secondaire devient supérieure ou égale à ladite longueur secondaire maximale donnée alors on coupe ledit segment secondaire concerné en deux segments secondaires de taille identique, et
- si la longueur secondaire d'un segment secondaire devient inférieure ou égale à ladite longueur secondaire minimale, on supprime ledit segment secondaire concerné et on allonge le segment secondaire adjacent ayant l'altitude la plus faible pour compenser.

10. Procédé selon l'une quelconque des revendications précédentes,
**caractérisé en ce que**, une longueur secondaire de consigne (L0) à atteindre pour les segments secondaires (41) étant déterminée, on découpe ledit segment principal (40) en une pluralité de segments secondaires (41, 42, 43) si la longueur dudit segment principal est supérieure à deux fois ladite longueur secondaire de consigne (L0).

11. Procédé selon l'une quelconque des revendications précédentes,
**caractérisé en ce que**, si durant la deuxième phase la trajectoire de consigne (50) construite ne permet pas de passer à plat sur au moins un segment secondaire (25, 26) et en générant une courbe continument montante (51), alors on modifie l'ossature (10) en fusionnant ledit au moins un segment secondaire (25, 26) avec le segment secondaire précédent (24) ledit au moins un segment secondaire (25, 26) pour construire un segment secondaire fusionné (24') auquel on attribue l'altitude dudit segment secondaire précédant (24).

12. Procédé selon l'une quelconque des revendications précédentes,
**caractérisé en ce que**, si durant la deuxième phase la trajectoire de consigne (50) construite ne permet pas de passer à plat sur au
moins un segment secondaire (26, 27, 28) et en générant une courbe continument descendante, alors on modifie l'ossature (10) en fusionnant ledit au moins un segment secondaire (26, 27, 28) avec le segment secondaire suivant (29) ledit au moins un segment secondaire (26, 27, 28) pour construire un segment secondaire fusionné (29') auquel on attribue l'altitude dudit segment secondaire suivant (29).

13. Procédé selon l'une quelconque des revendications 11 et 12
caractérisé eh ce que on construit ledit segment secondaire fusionné (24', 29') si ledit au moins un segment secondaire (25, 26) générant une courbe continument montante ne comprend pas ledit premier segment secondaire (42) ou si ledit au moins un segment secondaire (26, 27, 28) générant une courbe continument descendante ne comprend pas ledit dernier segment secondaire (43).

14. Procédé selon l'une quelconque des revendications précédentes,
**caractérisé en ce que**, un moyen de visualisation présentant ledit segment principal (40) et ledit aéronef (60) prolongé par un segment rectiligne (61), si l'aéronef (60) ne suit plus un segment principal (40), lorsque le segment rectiligne (61) croise de nouveau un segment principal (40) et sur ordre d'un opérateur, on crée un segment principal de retour (80) que l'on découpe automatiquement en une pluralité de segments secondaires de retour afin qu'une ossature de retour suive au plus près ledit terrain (S) et donne naissance à une trajectoire de retour.

**Patentansprüche**

1. Verfahren zur Hilfe bei der Steuerung eines Luftfahrzeugs (60) in niedriger Höhe über einem Gelände (S), welches durch eine Vorrichtung ausgeführt wird, im Laufe dessen, während einer ersten Phase, das Verfahren einen Schritt der Konstruktion eines Gerippes (10) aufweist, ausgehend von mindestens einem Hauptabschnitt (40) einer vorgegebenen Breite eines Korridors, der sich in einer horizontalen Projektion (X, Y) einer Modellierung des Geländes (S) erstreckt, ausgehend von einem ersten Durchgangspunkt (B) bis zu einem darauffolgenden zweiten Durchgangspunkt (C), die von einer Bedienungsperson bestimmt werden, und dann weist das Verfahren während einer zweiten Phase einen Schritt der Konstruktion einer Zielflugbahn (50) mit Hilfe des Gerippes (10) auf, wobei während der ersten Phase das Verfahren einen Schritt aufweist, der darauf abzielt, den Hauptabschnitt (40) automatisch in eine Mehrzahl von Unterabschnitte (41, 42, 43) einer vorgegebenen Breite des Korridors zu unterteilen, damit das Gerippe (10) dem Gelände (S) so genau wie möglich folgt, wobei die Unterabschnitte (41) von einem ersten Unterabschnitt (41) ausgehen, der an dem ersten Durchgangspunkt (B) beginnt, bis zu einem letzten Unterabschnitt (43), der auf dem zweiten Durchgangspunkt (C) endet, wobei jeder Unterabschnitt (41, 42, 43) in einer Zielhöhe (H1) des höchsten Punkts des Geländes, den er überragt, angeordnet ist, wobei die Zielhöhe (H1) für alle Unterabschnitte (41, 42, 43) eines Hauptabschnitts (40) angegeben ist, wobei zwei benachbarte Unterabschnitte (41) durch einen vertikalen Strich (44) in einem vertikalen Schnitt (X, Z) durch das Gelände, in dem der Hauptabschnitt (40) liegt, ausgerichtet oder verbunden sind,

**dadurch gekennzeichnet, dass** eine für die Unterabschnitte (41) zu erreichende Unterziellänge (L0) bestimmt wird, wobei die euklidische Division einer Hauptlänge (L1) des Hauptabschnitts durch die Unterziellänge (L0) einen Quotienten und einen Rest ergibt:

- wobei, wenn der Rest gleich Null ist, der Hauptabschnitt während der ersten Phase mit Hilfe einer Anzahl von Unterabschnitten, die gleich dem Quotienten ist, unterteilt wird, wobei die Unterabschnitte alle eine tatsächliche Unterlänge (L2) aufweisen, die gleich der Zielunterlänge (L0) ist,

- wobei, wenn der Rest von Null verschieden ist, das Hauptsegment während der ersten Phase mit Hilfe einerseits einer Anzahl von Untersegmenten, die eine Zielunterlänge (L0) aufweisen, die gleich dem Quotienten minus einer Einheit ist, und andererseits mit Hilfe eines verlängerten Unterabschnitts, der eine verlängerte Unterlänge (L3) aufweist, die gleich der Summe der Zielunterlänge (L0) und des Rests ist, unterteilt wird, wobei der verlängerte Unterabschnitt der erste Unterabschnitt des Hauptabschnitts ist.

2. Verfahren nach Anspruch 1,
**dadurch gekennzeichnet, dass** die Zielunterlänge (L0) von einer Bedienungsperson bestimmt wird.

3. Verfahren nach Anspruch 1,
**dadurch gekennzeichnet, dass** eine Bedienungsperson eine Zieldauer (D0) für das Durchqueren eines Unterabschnitts und eine angegebene Ziel-Reisegeschwindigkeit (IAS0) definiert, wobei die Zielunterlänge (L0) bestimmt wird durch Multiplikation der Zieldauer (D0) mit einer Geschwindigkeit über Grund, die berechnet wird ausgehend von der angegebenen Ziel-Reisegeschwindigkeit (IAS0) und der Geschwindigkeit des herrschenden Winds.

4. Verfahren nach einem der vorstehenden Ansprüche,
**dadurch gekennzeichnet, dass** während der ersten Phase eine Bedienungsperson eine gegebene Anzahl (N) von Unterabschnitten, deren Unterlänge minimiert werden muss, angibt, die Höhe (ALT) bezüglich einer vorgegebenen Bezugshöhe (LV0) eines jeden Unterabschnitts bestimmt wird, und:

- die Unterlänge der gegebenen Anzahl (N) von Unterabschnitten auf eine gegebene minimierte Länge minimiert wird, ausgehend von dem Unterabschnitt mit der höchsten (13, 15) Höhe (ALT), und anschließend in absteigender Reihenfolge der Höhen, um die vorgegebene Anzahl minimierter Unterabschnitte (13', 15') zu erhalten,
- jeder minimierte Unterabschnitt (13', 15'), der eine Höhe aufweist, die höher ist als die benachbarter Abschnitte, zentriert wird, um einen minimierten Unterabschnitt zu erhalten, der um den höchsten Punkt des Geländes herum zentriert ist, der von dem zentrierten minimierten Unterabschnitt (13', 15') überragt wird,
- wobei der Hauptabschnitt einen ersten Bereich (P1) aufweist, der sich von dem ersten Unterabschnitt (11) bis zu einem minimierten, zentrierten Unterabschnitt (13') erstreckt, einen zweiten Bereich (P3), der sich von einem zentrierten, minimierten Unterabschnitt (13', 15') zu dem letzten Unterabschnitt (18) erstreckt, und gegebenenfalls einen Zwischenbereich (P2) zwischen zwei zentrierten, minimierten Unterabschnitten (13', 15'), wobei in jedem dieser Bereiche (P1, P2, P3):

o ausgehend von jedem zentrierten minimierten Unterabschnitt (13', 15') die benachbarten Unterabschnitte (12) längs verschoben werden, um das Gerippe (10) wiederherzustellen, und dann,
o wenn der Unterabschnitt (11, 14, 16) erreicht wird, der die geringste Höhe in dem Bereich (P1, P2, P3) aufweist, der Unterabschnitt (11, 14, 16) mit der geringsten Höhe verändert wird, indem seine Unterlänge (L2) vergrößert oder verkleinert wird, um einen geänderten Unterabschnitt (11', 14', 16') zu erhalten, der mit mindestens einem benachbarten Unterabschnitt durch einen senkrechten Strich verbunden werden kann.

5. Verfahren nach Anspruch 4,
**dadurch gekennzeichnet, dass** die Unterlänge des ersten Unterabschnitts und des letzten Unterabschnitts nie minimiert wird.

**6.** Verfahren nach Anspruch 5,
**dadurch gekennzeichnet, dass** während einer Zwischenphase, die die erste Phase von der zweiten Phase trennt, das Gerippe (10) optimiert wird, indem der Wert des folgenden Ausdrucks ($\underline{E}$) minimiert wird:

$$\underline{E} = \int_{ti}^{tf} tdcp(x)dx - \int_{ti}^{tf} Zt(x)dx \quad ,$$

wobei $x$ die krummlinige Abszisse der Zielflugbahn ist,
$tdcp(x)$ die Funktion darstellt, die das Gerippe (10) beschreibt, welches während der ersten Phase bestimmt wurde,
$Zr(x)$ die Höhe (H2) des überflogenen Geländes (S) darstellt,
ti den Beginn des ersten Unterabschnitts darstellt,
tf das Ende des letzten Unterabschnitts darstellt.

**7.** Verfahren nach Anspruch 6,
**dadurch gekennzeichnet, dass** das Gerippe (10) mit einer vorgegebenen Schrittlänge über eine vorgegebene Strecke längs verschoben wird, wobei der Wert bei jedem Schritt erneut berechnet wird, wobei der Wert des Ausdrucks ($\underline{E}$) minimiert wird, indem während der zweiten Phase das Gerippe verwendet wird, welches zu einem minimalen Wert des Ausdrucks ($\underline{E}$) führt.

**8.** Verfahren nach einem der Ansprüche 4 bis 7,
**dadurch gekennzeichnet, dass**, wenn eine Verschiebung, eine Reduzierung oder eine Verlängerung eines Unterabschnitts zu einer Reduktion oder einer Steigerung der Höhe führt, die den Unterabschnitt von dem Gelände (S) trennt, dieser Unterabschnitt senkrecht auf die Zielhöhe (H1) des höchsten Punkts des Geländes, das er überragt, verschoben wird.

**9.** Verfahren nach einem der Ansprüche 4 bis 8,
**dadurch gekennzeichnet, dass** jeder Unterabschnitt, bevor er eine Unterlänge aufweist, die zwischen einer vorgegebenen minimalen Unterlänge und einer vorgegebenen maximalen Unterlänge liegt:

- der betroffene Unterabschnitt in zwei gleich große Unterabschnitte unterteilt wird, wenn die Unterlänge eines Unterabschnitts größer oder gleich der vorgegebenen maximalen Unterlänge wird, und
- der betroffene Unterabschnitt beseitigt wird und der benachbarte Unterabschnitt mit der geringsten Höhe zur Kompensation verlängert wird, wenn die Unterlänge eines Unterabschnitts kleiner oder gleich der minimalen Unterlänge ist.

**10.** Verfahren nach einem der vorstehenden Ansprüche,
**dadurch gekennzeichnet, dass** eine Zielunterlänge (L0), die für die Unterabschnitte (41) zu erreichen ist, bestimmt wird, indem der Hauptabschnitt (40) in eine Mehrzahl von Unterabschnitten (41, 42, 43) unterteilt wird, wenn die Länge des Hauptabschnitts größer ist als die doppelte Zielunterlänge (L0).

**11.** Verfahren nach einem der vorstehenden Ansprüche,
**dadurch gekennzeichnet, dass**, wenn während der zweiten Phase die konstruierte Zielflugbahn (50) es nicht erlaubt, stufenlos auf mindestens einen Unterabschnitt (25, 26) überzugehen, und wobei eine kontinuierlich ansteigende Kurve (51) erzeugt wird, das Gerippe (10) verändert wird, indem mindestens ein Unterabschnitt (25, 26) mit dem vorhergehenden Unterabschnitt (24) verschmolzen wird, um einen verschmolzenen Unterabschnitt (24') zu konstruieren, dem die Höhe des vorhergehenden Unterabschnitts (24) zugewiesen wird.

**12.** Verfahren nach einem der vorstehenden Ansprüche,
**dadurch gekennzeichnet, dass**, wenn während der zweiten Phase die konstruierte Zielflugbahn (50) es nicht erlaubt, stufenlos auf mindestens einen Unterabschnitt (26, 27, 28) überzugehen, und wobei eine kontinuierlich fallende Kurve erzeugt wird, das Gerippe (10) verändert wird, indem mindestens ein Unterabschnitt (26, 27, 28) mit dem folgenden Unterabschnitt (29) verschmolzen wird, um einen verschmolzenen Unterabschnitt (29') zu konstruieren, dem die Höhe des folgenden Unterabschnitts (29) zugewiesen wird.

**13.** Verfahren nach einem der Ansprüche 11 und 12,

**dadurch gekennzeichnet, dass** der verschmolzene Unterabschnitts (24', 29') konstruiert wird, wenn der mindestens eine Unterabschnitt (25, 26), der eine kontinuierlich ansteigende Kurve erzeugt, nicht den ersten Unterabschnitt (42) enthält, oder wenn der mindestens eine Unterabschnitt (26, 27, 28), der eine kontinuierlich sinkende Kurve erzeugt, nicht den letzten Unterabschnitt (43) enthält.

14. Verfahren nach einem der vorstehenden Ansprüche,
**dadurch gekennzeichnet, dass** ein Anzeigemittel den Hauptabschnitt (40) und das Luftfahrzeug (60) verlängert um einen rechtwinkligen Abschnitt (61) darstellt, wenn das Luftfahrzeug (60) nicht mehr einem Hauptabschnitt (40) folgt, wenn der rechtwinklige Abschnitt (61) erneut einen Hauptabschnitt (40) kreuzt und auf Befehl einer Bedienungsperson ein Umkehr-Hauptabschnitt (80) erzeugt wird, der automatisch in eine Mehrzahl von Umkehr-Unterabschnitte unterteilt wird, damit ein Umkehr-Gerippe so genau wie möglich dem Gelände (S) folgt und eine Umkehr-Flugbahn erzeugt.

**Claims**

1. Method of assisting the piloting of an aircraft (60) at low altitude over a terrain (S) implemented by a device in the course of which, during a first stage, the method comprises a step of construction of a framework (10) from at least one main segment (40) of a given corridor width extending in a horizontal projection (X, Y) of a modelling of said terrain (S) from a first waypoint (B) to a second waypoint (C) which are successive and determined by an operator, and then during a second stage, the method comprises a step of construction of a setpoint trajectory (50) with the help of said framework (10).
during the first stage, the method comprises a step aimed at automatically subdividing said main segment (40) into a plurality of secondary segments (41, 42, 43) of a given corridor width so that the framework (10) follows said terrain (S) as closely as possible, said secondary segments (41) going from a first secondary segment (42) starting from said first waypoint (B) to a last secondary segment (43) arriving at the second waypoint (C), each secondary segment (41, 42, 43) being arranged at a setpoint height (H1) from the highest point of the terrain that it overlies, said setpoint height (H1) is identical for all of the secondary segments (41, 42, 43) of a main segment (40), with two adjacent secondary segments (41) being aligned or connected together by a vertical bar (44) in a vertical section (X, Z) of said terrain passing through said main segment (40),
**characterised in that**, a setpoint secondary length (L0) to be reached for the secondary segments (41) being determined, and the Euclidean division of a main length (L1) of the main segment by the setpoint secondary length (L0) giving a quotient and a remainder:

- if said remainder is zero, during the first stage the main segment is subdivided with the help of a number of secondary segments equal to said quotient, said secondary segments all having a real secondary length (L2) equal to said setpoint secondary length (L0),
- if said remainder is not equal to zero, during the first stage the main segment is subdivided in part with the aid of a number of secondary segments having the setpoint secondary length (L0) equal to said quotient minus one unit and in part with the aid of a lengthened secondary segment having a lengthened secondary length (L3) equal to the sum of the setpoint secondary length (L0) and the remainder, said lengthened secondary segment being the first secondary segment of the main segment.

2. Method according to claim 1,
**characterised in that** said setpoint secondary length (L0) is determined by an operator.

3. Method according to claim 1,
**characterised in that**, an operator defining both a setpoint duration (D0) for traversing a secondary segment and a setpoint indicated air speed (IAS0), said setpoint secondary length (L0) is determined by multiplying said setpoint duration (D0) by a ground speed calculated from said setpoint indicated air speed (IAS0) and the prevailing wind.

4. Method according to any one of the preceding claims, **characterised in that**, during the first stage, an operator specifying a given number (N) of secondary segments of a secondary length that is to be minimised, the altitude (ALT) of each secondary segment is determined relative to a given reference level (LV0), and:

- the secondary length of said given number (N) of secondary segments is minimised to a given minimum length starting from the secondary segment having the greatest (13, 15) altitude (ALT) and continuing in order of decreasing altitude in order to obtain said given number of minimised secondary segments (13', 15').

- each minimised secondary segment (13', 15') having an altitude greater than the adjacent secondary segments is centred so as to obtain a minimised secondary segment centred about the highest point of the terrain underlying said centred minimised secondary segment (13', 15'),

- said main segment comprising a first portion (P1) going from the first secondary segment (11) to a centred minimised secondary segment (13'), a second portion (P3) going from a centred minimised secondary segment (13', 15') to the last secondary segment (18), and optionally at least one intermediate portion (P2) between two centred minimised secondary segments (13', 15'), in each of said portions (P1, P2, P3):

    o starting from each centred minimised secondary segment (13', 15'), the adjacent secondary segments (12) are moved longitudinally to reconstitute the framework (10), and then

    ∘ on reaching the secondary segment of said portion (P1, P2, P3) having the lowest altitude (11, 14, 16), said secondary segment having the lowest altitude (11, 14, 16) is modified by increasing or reducing its secondary length (L2) so as to obtain a modified secondary segment (11', 14', 16') suitable for being connected to at least one adjacent secondary segment by a vertical bar.

**5.** Method according to claim 4,
**characterised in that** the secondary length of said first and last secondary segments is never minimised.

**6.** Method according to claim 5,
**characterised in that** during an intermediate stage separating the first stage from the second stage, the framework (10) is optimised by minimising the value of the following expression ($\underline{E}$) :

$$\underline{E} \;=\; \int_{ti}^{tf} tdcp(x)dx - \int_{ti}^{tf} Zt(x)dx$$

where $x$ is the curvilinear abscissa of the setpoint trajectory,
$tdcp(x)$ represents the function describing the framework (10) determined during the first stage,
$Zt(x)$ represents the height (H2) of the overflown terrain (S),
ti represents the beginning of the first secondary segment,
tf represents the end of the last secondary segment.

**7.** Method according to claim 6,
**characterised in that**, said framework (10) being moved longitudinally by a given step in iterative manner over a given distance, said value being recalculated on each step, the value of said expression ($\underline{E}$) is minimised during the second stage by using the framework giving rise to a minimum value of said expression ($\underline{E}$).

**8.** Method according to any one of claims 4 to 7,
**characterised in that**, if a movement, a shortening or a lengthening of a secondary segment gives rise to a reduction or an increase in the height separating the secondary segment from the terrain (S), then said secondary segment is moved vertically to said setpoint height (H1) from the highest point of the terrain that it overlies.

**9.** Method according to any one of claims 4 to 8,
**characterised in that**, each secondary segment being required to have a secondary length lying between a given minimum secondary length and a given maximum secondary length, then:

    - if the secondary length of a secondary segment becomes greater than or equal to said given maximum secondary length, then said secondary segment in question is subdivided into two secondary segments of identical size, and

    - if the secondary length of a secondary segment becomes shorter than or equal to said minimum secondary length, then said secondary segment in question is eliminated and the adjacent secondary segment having the lowest altitude is lengthened to compensate.

**10.** Method according to any one of the preceding claims,
**characterised in that**, a setpoint secondary length (L0) to be reached for the secondary segments (41) being determined, said main segment (40) is subdivided into a plurality of secondary segments (41, 42, 43) if the length of said main segment is greater than twice said setpoint secondary length (L0).

11. Method according to any one of the preceding claims,
**characterised in that**, if during the second stage the constructed setpoint trajectory (50) does not make it possible to pass level over at least one secondary segment (25, 26) and in generating a continuously rising curve (51), then the framework (10) is modified by fusing said at least one secondary segment (25, 26) with the secondary segment preceding (24) said at least one secondary segment (25, 26) in order to construct a fused secondary segment (24') which is given the altitude of said preceding secondary segment (24).

12. Method according to any one of the preceding claims,
**characterised in that**, if during the second stage the constructed setpoint trajectory (50) does not make it possible to pass level over at least one secondary segment (26, 27, 28) and in generating a continuously descending curve, then the framework (10) is modified by fusing said at least one secondary segment (26, 27, 28) with the secondary segment following (29) said at least one secondary segment (26, 27, 28) in order to construct a fused secondary segment (29') which is given the altitude of said following secondary segment (29).

13. Method according to any one of claims 11 and 12,
**characterised in that** said fused secondary segment (24', 29') is constructed if said at least one secondary segment (25, 26) generating a continuously rising curve does not comprise said first secondary segment (42) or if said at least one secondary segment (26, 27, 28) generating a continuously descending curve does not comprise said last secondary segment (43).

14. Method according to any one of the preceding claims,
**characterised in that**, for a display means presenting said main segment (40) and said aircraft (60) extended by a rectilinear segment (61), if the aircraft (60) is no longer following a main segment (40), when the rectilinear segment (61) crosses a main segment (40) once more, and on instruction from an operator, a return main segment (80) is created that is subdivided automatically into a plurality of return secondary segments so that a return framework follows said terrain (S) as closely as possible and gives rise to a return trajectory.

Fig.1

EP 2 267 682 B1

**Fig.2**

**Fig.3**

**Fig.4**

Fig.5

Fig.6

Fig.7

Fig.8

Fig.9

Fig.10

Fig.11

Fig.12

Fig.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6317690 B
- FR 2712251
- FR 1374954
- WO 2004095394 A
- FR 2658636
- US 20060031004 A
- US 5706011 A
- EP 0775953 A
- US 7321812 B
- FR 2888955
- EP 1598718 A